(19) **Europäisches Patentamt European Patent Office Office européen des brevets**

(11) **EP 2 304 895 B1**

(12) **EUROPEAN PATENT SPECIFICATION**

(45) Date of publication and mention of the grant of the patent:
**27.12.2017 Bulletin 2017/52**

(51) Int Cl.:
*H04L 9/08* (2006.01)

(21) Application number: **09784674.5**

(22) Date of filing: **10.07.2009**

(86) International application number:
**PCT/GB2009/001714**

(87) International publication number:
**WO 2010/004290 (14.01.2010 Gazette 2010/02)**

(54) **SECURE COMMUNICATION METHOD**

LABORGERÄT FÜR EINE GESTEUERTE UMGEBUNG

PROCÉDÉ DE COMMUNICATION SÉCURISÉE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **11.07.2008 GB 0812775**

(43) Date of publication of application:
**06.04.2011 Bulletin 2011/14**

(73) Proprietor: **University of Hertfordshire Higher Education Corporation Hatfield Hertfordshire AL10 9EU (GB)**

(72) Inventors:
• **TURITSYN, Sergei, K.**
  **Birmingham B4 7ET (GB)**
• **SHAFARENKO, Alex**
  **Hatfield AL10 9AB (GB)**
• **CHRISTIANSON, Bruce**
  **Hatfield AL10 9AB (GB)**

(74) Representative: **CSY St Albans 45 Grosvenor Road St Albans, Hertfordshire AL1 3AW (GB)**

(56) References cited:
• **DODIS Y; SMITH A: "correcting errors without leaking partial information" PROCEEDINGS OF THE THIRTY-SEVENTH ANNUAL ACM SYMPOSIUM ON THEORY OF COMPUTING; ASSOCIATION FOR COMPUTING MACHINERY, [Online] 24 May 2005 (2005-05-24), pages 654-663, XP002554053 Baltimore, Maryland, USA ISBN: 1-58113-960-8 Retrieved from the Internet: URL:http://portal.acm.org/citation.cfm?id= 1060590.1060688> [retrieved on 2009-11-04]**
• **YAN ZONG DING: "Error Correction in the Bounded Storage Model" SPRINGER VERLAG, LECTURE NOTES IN COMPUTER SCIENCE, vol. 3378, 27 January 2005 (2005-01-27), pages 578-599, XP002554054 Berlin / Heidelberg ISBN: 978-3-540-24573-5**

## Description

### FIELD OF THE INVENTION

The invention relates to methods of secure communication which use a broadcast random data stream. For example, the invention may relate to a secure method for distributing secret information, e.g. a bit string for use as a key.

### BACKGROUND TO THE INVENTION

A system in which perfect secrecy in communications is achieved by "memory bounding" an enemy has been proposed [14]. This proposal suggested using a high bandwidth satellite channel with low error rate to broadcast a random data stream. When an enemy does not have the capability to record the entire broadcast, it is theoretically possible to achieve unconditional security for a limited extract therefrom.

US 7006633 developed this idea further, proposing that the random data stream be broadcast continuously from a beacon and disclosing a method for users to download samples from the stream based on an initial shared key to generate one,or more matching random number reservoirs from which an encrypting key for secure communications can be drawn. Similar beacon systems have been proposed before in connection with satellites [3,4].

The known beacon systems require a low bit error rate for the random data stream, to prevent mismatch between the keys extracted by each user. Transmission media with relatively high bit error rate, e.g. $10^{-3}$ or worse, may thus be considered unsuitable for use with such systems. US 7006633 discloses a technique of reducing the bit error rate of a transmission media by incorporating error correction packets into the random data stream. This adds a deterministic element to the stream and reduces the transmission rate of the random data because of the need to calculate the error correction packets.

Transmission media capable of the highest transmission rates (e.g. optical fibres able to transmit at rates greater than 1 Terabit per second (Tbps)) may appear most suited to memory bounding techniques because they are capable of overloading an enemy's storage capabilities in a realistic timescale. However, such transmission media also have relatively high bit error rates, so they appear incompatible with the techniques proposed above. Moreover, since the direction of development in the communication industry is to reduce bit error rate, developments in secure communications have focussed on using quantum technology in optical fibre systems having very low bit error rates. Such systems can enable passive eavesdropping to be detected, but come at a very high cost [5-10] and still require at least a weak form of end-to-end authentication to avoid a man-in-the-middle attack. Dodis, Y. et al "Correcting errors without leaking partial information", Proc. of 37th ACM Symp. on Theory of Computing; 24. May 2005 relates to a randomisation of a linear error correction syndrome to avoid leaking information about the shared secret.

### SUMMARY OF THE INVENTION

The present invention relates to a method as claimed in claim 1. Preferred embodiments are defined in the dependent claims. At its most general, the present invention provides an error correction protocol which makes available for use optical transmission regimes impacted by high bit error rates (which makes them unsuitable for ordinary data transmission) for broadcasting a high bandwidth random data stream in a communication system for establishing a shared secret. The invention may make practical the use of optical fibres in a system which achieves perfect secrecy in communications by memory bounding an enemy. As is known in the art and explained in US 7006633 a enemy is "memory bounded" if it does not have sufficient memory to record all or a very large proportion of the transmitted random data stream, i.e. it does not have a substantially complete picture of the transmitted data.

The error correction protocol proposed herein in fact turns the bit error rate of the transmission system into an secondary security advantage, because an enemy (interceptor) will obtain different information to the users (caused by the bit error rate) and will not have the means to correct those errors to match the information obtained by the legitimate users. This remains an advantage even in the case where the users are exposed to a higher bit error rate than the enemy.

According to the invention there may be provided a method of establishing a shared secret between a first user and a second user arranged to receive a random data stream, the method including: each user extracting independently one or more keychain bits from the random data stream in a synchronised manner to generate a keychain having a key portion and an error correction encoding portion, the extracting being at an extraction rate chosen to memory bound an enemy; the first user applying a error correction function to its key portion to generate a result, coding the result using the error correction encoding portion and communicating the coded result to the second user; and the second user decoding the coded result received from the first user using its error correction encoding portion and obtaining a recovered key portion from its extracted key portion by using the decoded result to correct differences between the key portions extracted by the first and second users caused by a bit error rate of the random data stream, wherein the first user's key portion and the second user's recovered key portion are usable as the shared secret. The method thus allocates a portion of the extracted data for the purpose of masking the result of the error correction function when it is sent between the users. The security of that result is therefore matched with the security of the key portion itself.

The method may enable the first user's key portion and the second user's recovered key portion to be identical. The shared secret may be a bit string for use as an encrypting key, e.g. to encrypt plaintext before transmission and to decrypt ciphertext after receipt.

The error correction function may be a checksum function, e.g. a forward error correction (FEC) code function. The error correction encoding portion of the keychain may be chosen to have the same bit length as the result of the checksum function. This may permit the coding step to include performing an XOR operation (i.e. an addition modulo 2 function), for example a bit-wise XOR, to the result of the checksum function using the error correction encoding portion as a one time pad.

The first user and the second user may include client devices e.g. computing systems, PCs or the like arranged to receive the random data stream. In one embodiment the source of the random data stream (referred to herein as a beacon) may be located with one of the users. Preferably, however, it is located remotely from the users.

The random data stream may be transmitted via optical media, e.g. one or more optical fibres. An ultra-high bit rate of transmission of random bits over optical fibre may make it extremely difficult technically and infeasible practically to store any significant proportion of intercepted information. The random data stream may be transmitted using a mixture of optical time division multiplexing (OTDM) and wavelength division multiplexing (WDM) to provide an extremely high rate of bit transmission. For example, a single optical fibre can already carry more than 1 Tbps with a bit error rate less than $10^{-3}$. These transmission errors may be mitigated through use of the invention. Furthermore, the protocol may be capable of coping with bit error rates greater than $10^{-3}$. Thus, the current stringent conventional restrictions on bit error rate applicable to data used for communication need not be applied for the purposes of the invention. Implementation of multi-terabit channels over terrestrial links is therefore fully feasible using large fibre bandwidth and any of numerous well-developed optical transmission technologies. In this context, the combination of OTDM (which is relevant to the transmission bit rate in a single frequency channel) and WDM (which is relevant to the creation of many frequency channels) techniques may provide control of the granularity of the bit transmission. The total transmitted bit rate $N$ may be expressed as $K \times M$, where $K$ is the bit rate in a single transmission channel and $M$ is the number of channels. Moreover, the variety of available optical technologies (e.g. advanced data formats, distributed optical amplification, dispersion management and the like) may provide additional flexibility in implementation.

In a preferred embodiment the random data stream transmission rate is 1 Tbps or more.

The extraction of bits from the random data stream may be according to an extraction schedule generated by each user based on a initial shared secret. The initial shared secret may be a key, e.g. distributed via physically secure channels. The shared secret (hereinafter referred to as a key) may be a relatively short bit string, e.g. having a bit length of at least 64 bits. The extraction schedule may be generated from the key using an algorithm, which may be public. The key may be part of a shared secret previously established according to the invention disclosed herein.

For each user to extract the same bit according to the extraction schedule, the random data stream is synchronised with respect to the users. Each user may have a clock, whereby synchronisation is achieved by aligning the clock timing with a synchronisation event in the random data stream. Synchronisation events may be transmitted periodically to enable realignment of the clock and/or to enable new users to join the system.

To memory bound an enemy, the extraction rate may be 1 bit per $10^{16}$ or more transmitted bits. In such an embodiment by the time a keychain of 1000 bits is extracted $10^{19}$ bits will have been transmitted, which is $10^6$ times beyond the present storage capability of a hard disk drive. At a total transmission rate of 10 Tbps, it would take less than two weeks to extract the keychain. It is anticipated that in future achievable transmission rates will increase at least in line with economically available storage, such that the ability to memory bound an enemy by extracting a keychain from an overwhelming (i.e. practically unviable to store) amount of data in a practical timescale can be preserved. Even if the future progress in the transmission and storage rates is uneven, the present system is still viable e.g. by reducing the extraction rate, e.g. by increasing length of extraction period for a given keychain length.

The protocol may incorporate additional checks. For example, the method may include the first user applying a check function to its key portion to generate a first check output and communicating the first check output to the second user, and the second user applying the check function to the recovered key portion to generate a second check output and comparing the first and second check outputs. If the first and second check outputs are a good match, i.e. match within predetermined error tolerances, the recovery process for the key portion may be verified as successful. The keychain may include an error check encoding portion and the method may include coding the first check output using the error check encoding portion, and communicating the coded result to the second user; and the second user obtaining the first check output by decoding the coded result received from the first user using its error check encoding portion.

The error check encoding portion may be used to mask the check output data when it is sent between the users. The security of that data is therefore matched with the security of the key portion itself.

The check function may be a collision resistant function for providing mapping between a key portion and a check output. The collision resistant function may be a cryptographic hash function, a checksum (e.g. a 32 bit cyclic redundancy (CRC32)), or a message authentication code (MAC) if a key is shared between users. According to the method discussed above, the output of the check function is used to check that the second user's recovered key portion matches the first's key portion. This is done by obtaining the first check output at the second user and comparing this to a check output obtained by applying the check function to the recovered key portion. If the comparison reveals differences within acceptable (e.g. predetermined) tolerances, the recovered key portion may be safely assumed to be identical to the first user's key portion.

In one embodiment, the comparison step may be improved by ensuring that the error check encoding portion used by the first and second users is identical. This may be achieved by distributing error correction information about the error check encoding portion between users. For example, the method may include the first user applying the error correction function to its error check encoding portion (in one embodiment the error correction function may be applied to the key portion and the error check encoding portion in combination) to obtain a result, coding the result using the error correction encoding portion and communicating that result to the second user; and the second user decoding the coded result and obtaining a recovered error check encoding portion (e.g. in addition to the recovered key portion) from its error check encoding portion by using the decoded result to correct differences.

Similarly to the error correction encoding portion discussed above, the error check encoding portion of the keychain may be chosen to have the same bit length as the output of the error check function (e.g. the hash function). This may permit the coding step to include performing an XOR operation (i.e. an addition modulo 2 function) to the result using the error check encoding portion as a one time pad. To prevent the introduction of errors by using the coding steps, it may be ensured that the first and second user have the same error check encoding portion.

In embodiments where the beacon is located remotely from the users, e.g. where the beacon is located on a fibre optic loop to provide the random data stream to a plurality of users located at loop nodes, it is desirable to authenticate the random data stream to prevent man in the middle type attack. Ensuring the authenticity of a communication path may be more important for fibre optic technology than for satellite broadcast technology because there is a greater threat of compromising a physical fibre (e.g. by bypassing it at some point along its length) than a satellite broadcast (which may be regarded as an accurately known point source in the sky).

Accordingly, the method may include each user extracting a plurality of sample bits from the random data stream at a sampling rate greater than the keychain extraction rate for subsequent comparison to extracts of the data stream which are certified by the beacon to authenticate the data stream. The proportion of the data stream that is certified and the sampling rate may be selected based on a Merkle-type protocol [11], whereby the probability of collisions between the samples and the certified extracts is high enough for a user to verify its samples. In one embodiment to ensure a minimum number of collisions $X$ (e.g. 50 or 100), the bit sample rate for the beacon $R_{beacon}$ and the bit sample rate for each user $R_{user}$ may be chosen to satisfy

$$R_{beacon} R_{user} \geq \frac{2X}{T} \, ,$$

where $T$ is the total number of bits transmitted by the beacon over the key agreement period.

Both the certified extracts and the user samples may be obtained at random. Each random sample may be a single bit. One of the beacon or user may extract a plurality of sample bits for each random sample. To ensure that the probability of collision remains at a reasonable level, only one of the beacon or the user may extract a plurality of sample bits for each random sample. In a preferred embodiment each random sample extracted by the beacon is a sample bit string. An advantage of this is that the total number of bits required for specifying the location of the random sample is less than the case where individual bits are extracted. Another advantage is that the effect of burst errors may be mitigated.

Certification may be by public key signature or hash pre-image [12,13]. The certified extracts may include data identifying the location (e.g. channel and time) in the random data stream of the extracted bits as well as their values.

The method may include publishing each certified extract of the data stream a predetermined time after actual transmission of the bits in that extract. Publication may be in instalments, the predetermined time for each instalment providing a delay to guard against the possibility of a replay attack. Publication may take place offline; for example, publishing each certified extract may include sending it or a cryptographic hash of it to each user on tamper evident physical storage media.

As mentioned above, the certified extracts may be obtained from the transmitted data stream at a rate calculated to ensure a predetermined amount of overlap (collision) with the sample bits extracted by each user. In one embodiment the certified extracts and the samples may have the same bit length. The authentication protocol is arranged to determine the common bits in the certified extracts and samples. Using this method, each user may verify the integrity of the bits they have shared. The stream may be verified as authentic if the bits in the common strings demonstrate a match of 80% or greater. The matching threshold value may be set depending on the bit error rate of the data stream and the number of common bits expected. For example, the sampling rate may be 1 bit per $10^9$ or fewer transmitted bits. The sample rate may be determined based on the transmission rate and the required keychain length. The users' sampling rates may be different from each other and from the sampling rate of the beacon.

BRIEF DESCRIPTION OF THE DRAWINGS

An illustrative environment for working the invention and example of its implementation are described below with reference to the accompanying drawings, in which:

Fig. 1 is a schematic block diagram of an illustrative operating environment for the invention;
Fig. 2 is a schematic block diagram for a user computing system suitable for the invention;
Fig. 3 is a flow diagram illustrating key distribution method that is an embodiment of the invention; and
Fig. 4 is a flow diagram illustrating a stream authentication method that can be used with the invention.

DETAILED DESCRIPTION; FURTHER OPTIONS AND PREFERENCES

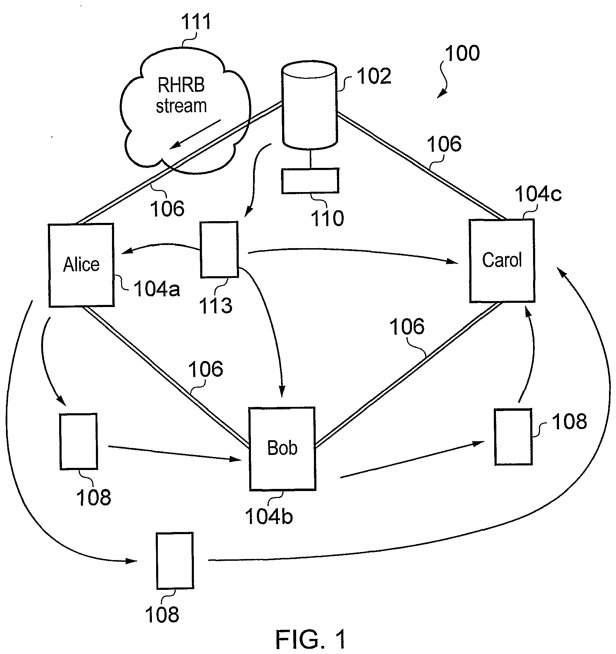

Fig. 1 illustrates schematically a communications network 100 that is an illustrative operating environment for the invention. The network 100 comprises a beacon 102 connected in series with a plurality of user computing systems 104a, 104b, 104c via a loop network of fibre optic cables 106. The beacon 102 is in communication with a random number generator 110 and is arranged to generated and transmit into the loop network a random high rate binary (RHRB) stream 111. The RHRB stream 111 may be transmitted using a mixture of optical time division multiplexing (OTDM) and wavelength division multiplexing (WDM) to provide a transmission rate of more than 1 Tbps. The fibre optic cables 106 may each carry a plurality of optical fibres, some of which may be dedicated to carrying the RHRB stream 111.

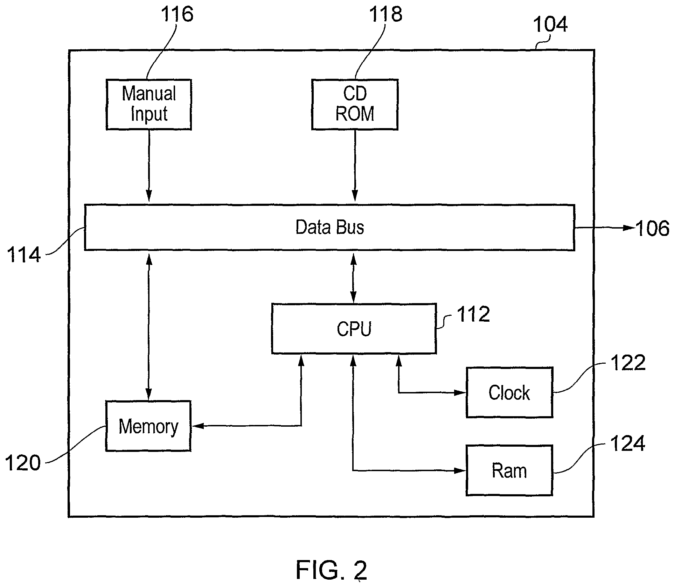

Each computing system 104 is arranged to receive the RHRB stream 111. An exemplary configuration for a user computing system 104 is described below with reference to Fig. 2. Each computing system is arranged to extract bit samples, e.g. samples comprising one or more bits, from the stream according to a calculated extraction or sampling schedule (explained below). A sampling action may be to obtain one or more bits for authentication or to add a bit to a keychain or for both. The data stream may be sent via a plurality of channels, e.g. 10 or more, preferably 100 or more channels. Each user computing system may be arranged to receive only one channel at once; each sampling action may include an instruction to switch to an appropriate channel. An advantage of this feature is that an interceptor must have the processing capability to deal with all channels of the RHRB stream 111 simultaneously, whereas the user computing systems 104 need only have the processing capability to deal with one channel at any given time.

Each user in a key group, i.e. a group of users between whom a key is to be distributed, e.g. {Alice, Bob and Carol} in this embodiment, may have a separate secure e.g. physical channel 108 through which they share a relatively weak key as a preliminary step in establishing a strong shared secret.

In this embodiment the beacon 102 is also arranged to communicate with each user computing system via a channel 113. This channel is for communication of certified extracts of the RHRB stream 111, and so needs to have integrity and a means of demonstrating beacon authenticity. It may be a physical channel. For example, the certified extracts may be stored on a tamper evident storage medium (e.g. CD ROM or the like) and transported e.g. using a trusted courier to each user. Alternatively, the channel 113 may be a side channel on the fibre optic cable 106, in which case the certified extracts may be published. To guard against replay attack, the extracts are published after a time delay, e.g. greater than the time interval between extracting bits for the keychain.

Fig. 2 illustrates schematically a typical hardware configuration for a user computing system 104. The computing system 104 may be implemented on any suitable computing device, e.g. PC, server or the like, that is capable of receive data via the fibre optic cable 106. It is understood that components in addition to those illustrated may be present.

The computing system 104 includes a data bus 114 for routing signals between internal components and to and from a fibre optic module (not shown) for receiving the RHRB stream 111 via the fibre optic cable 106 and directing one (or more) channels into the computing system. A central processing unit (CPU) 112, e.g. microprocessor or the like, is provided with the capability to receive and perform calculations using the data delivered into the computing system from the RHRB stream 111. In particular, the CPU 112 is arranged to carry the steps of the extraction method described below based e.g. on program instructions stored in volatile memory 124 and information from the clock 122. The relatively weak key from secure channel 108 may be manually entered into the computing system 104 via an input device (e.g. keyboard) 116 or using a physical media reader (e.g. disk drive) 118. This key and the bits sampled and extracted from the RHRB stream 111 may be stored in a memory 120.

The beacon 102 is a device arranged to produce random digital streams, e.g. one per wavelength-division multiplexed (WDM) channel, using any technology for physical randomness. For example, the beacon 102 may use a resistor whose thermal noise is filtered and discriminated to produce digital data. The beacon 102 also comprises circuitry arranged to record random bits or bit strings together with their position in the stream for use in authentication (discussed below). All transmission is in blocks of a certain size in each channel, and all blocks contain FEC-protected headers with block numbers, so that each user can reliably synchronise with the block count in every channel that they monitor at any given time despite the fact that the actual data in each block may be unreliable (e.g. due to a relatively high BER). Since the header size is tiny compared to the block size (e.g. tens of bits compared with tens of megabits), and since the header is a number being incremented in every new packet and so is highly predictable, the FEC recovery of the header can be made as reliable as necessary for BERs in the region expected for this invention.

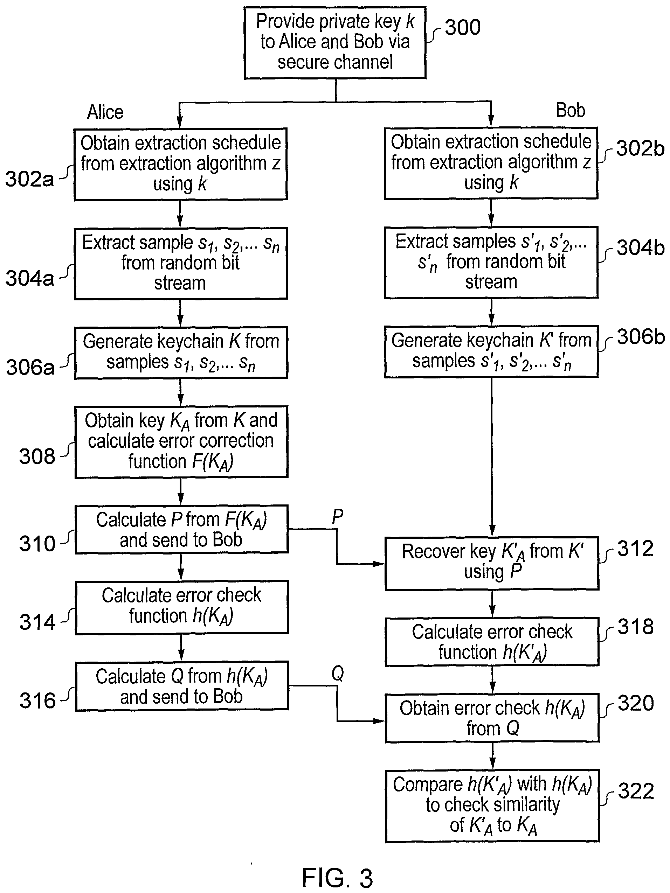

Fig. 3 is a flow diagram illustrating steps in a secure key distribution scheme that is an embodiment of the invention. The scheme provides a method of establishing a shared secret that rivals much more expensive quantum key distribution schemes, for example the one used by Toshiba [7]. The scheme described herein does not involve quantum technology, which is expensive and has a limited propagation distance.

The method disclosed in Fig. 3 is the establishing of a shared secret between Alice and Bob. It beings at step 300, where a weak secret $k$ is provided to Alice and Bob via a private and endpoint-authenticated channel. The weak secret may be a relatively short key, e.g. a 64 bit key.

Using the weak secret $k$, Alice and Bob obtain an extraction schedule at steps 302a, 302b. The schedule may be obtaining by using an extraction algorithm $z$, which may be arranged to determine a channel and precise extraction time for samples to be extracted from the stream.

At steps 304a, 304b, Alice and Bob extract from the random data stream a plurality of bits $s_1, s_2 ... s_n$ and $s'_1, s'_2 ... s'_n$ respectively. Each bit is extracted at an extraction time determined at step 302a. The extraction schedules determined by Alice and Bob are identical. Accordingly, so long as the streams received by Alice and Bob are synchronised (which may be achieved using conventional synchronising techniques), the bits obtained by Alice and Bob should be the same except for transmission errors. Each bit is added to a keychain. The extraction rate of sample bits is such that the rate of extraction of keychain bits is very low, e.g. 1 extracted bit for every $10^{16}$ to $10^{18}$ transmitted bits.

At step 306a Alice generates a keychain $K$ using a sample bits $s_1, s_2 ... s_n$. The keychain $K$ has the form:

$$K = K_A \Big| K_{A(EC)} \Big| K_{A(check)} \; .$$

Similarly, at step 306b Bob generates key $K'$ using a sample bits $s'_1, s'_2 ... s'_n$ :

$$K' = K_B \Big| K_{B(EC)} \Big| K_{B(check)}$$

As mentioned above, the extraction of samples is synchronised such that if the data stream was error-free sample bits $s'_1, s'_2 ... s'_n$ would correspond exactly to sample bits $s_1, s_2 ... s_n$. However, there will be some errors in transmission, so Bob's keychain $K'$ will not correspond exactly to Alice's keychain $K$. The errors are due to the bit error rate (BER) of the fibre optic cable. Respective portions $K_{A(EC)}, K_{B(EC)}$ and $K_{A(check)}, K_{B(check)}$ are used to correct for transmission errors according to the following protocol:

$$P = K_{A(EC)} \oplus F(K_A)$$

$$Q = K_{A(check)} \oplus h(K_A)$$

where in this embodiment $F$ is a checksum (e.g. forward error correction code) function and $h$ is a cryptographic hash function. The bit lengths of $K_{A(EC)}$ and $K_{A(check)}$ are chosen to match the checksum length of $F$ and the length of the hash $h$ respectively.

In use, at step 308 Alice obtains $K_A$ from keychain $K$ and calculates the error correction function $F(K_A)$. At step 310 Alice calculates a value for $P$ and transmits it to Bob. This transmission may be done over an insecure channel, e.g. any open unauthenticated channel which can provide message integrity. For example, the transmission may be broadcast openly. An advantage of this is that the enemy cannot then even find out who are the members of the key group. In this embodiment Alice calculates and transmits $P$ and $Q$ separately. However, Alice may in fact calculate both $P$ and $Q$ and make a single transmission to Bob of a calculated value of $P|Q$.

At step 312 Bob may recover $K_A$ from $K_B$ by computing the following:

$$F_1 = K_{B(EC)} \oplus P \; .$$

$F_1$ should be very similar to $F(K_A)$; any differences are caused by errors between $K_{A(EC)}$ and $K_{B(EC)}$. A recovered value for $K_A$ (indicated here as $K'_A$) may then be found using error recovery from $K_B$ and $F_1$.

The protocol includes a check mechanism to verify the recovery process. The check mechanism includes at step 314 Alice calculating a hash of $K_A$ to permit calculation of $Q$ at step 316. $Q$ is transmitted to Bob.

Meanwhile, at step 318 Bob calculates a hash for the recovered value for $K_A$ (i.e. computes $h(K'_A)$). On receipt of $Q$, at step 320 Bob recovers a value for the hash computed by Alice by computing:

$$F_2 = K_{B(check)} \oplus Q$$

$F_2$ should be very similar to $h(K_A)$; any differences are caused by errors between $K_{A(check)}$ and $K_{B(check)}$.

At step 322 Bob checks that the recovered value of the hash obtained in step 320 matches the hash computed for the recovered value of $K_A$, i.e. compares $h(K_A)$ with $h(K'_A)$. If there is a match, e.g. the matching bits exceed a predetermined threshold (e.g. 80%), Alice and Bob can have high confidence that $K_A$ and $K'_A$ are identical and may therefore use them as a shared secret.

In an alternative embodiment the protocol may define

$$P = K_{A(EC)} \oplus F(K_A | K_{A(check)})$$

$$Q = K_{A(check)} \oplus h(K_A)$$

whereby Bob can recover $K'_A$ and $K'_{A(check)}$ at step 312. The recovered value $K'_{A(check)}$ may then be used to decode more accurately $h(K_A)$ from Q at step 320. In this case there should be no differences between $h(K'_A)$ and the value recovered from $Q$ using $K'_{A(check)}$.

In a further alternative embodiment the protocol may define

$$P = K_{A(EC)} \oplus F(K)$$

$$Q = K_{A(check)} \oplus h(K)$$

whereby Bob can recover the whole of Alice's keychain.

If we assume for the purpose of explanation that the keychain has a bit length of $10^3$ bits, the total amount of random data that is transmitted in obtaining the keychain given a keychain bit extraction rate mentioned above is $10^{19}$ to $10^{21}$ bits. This is $10^6$ to $10^9$ times current hard drive capacity, which makes it infeasible for an interceptor (Eve) to store the stream for subsequent cryptanalysis, which is what the interceptor would have to do in the absence of the key $k$. Alternatively Eve could record the selection of bits that correspond to every value of the weak shared secret, which under the above assumptions requires the same or greater amount of storage $2^{64} \times 10^3$.

The members of the key group have no need to capture the whole stream, but store only the tiny part of it that is the key. Effectively this allows a pseudo-random sequence generated from a weak key to be leveraged up into a strong genuinely random key.

The stream observation time for a $10^3$ bit keychain, given a 1 Tbps transmission rate and a $10^{-16}$ extraction rate, is $10^7$ seconds, i.e. nearly four months. Altering the transmission rate and extraction rate may permit observation times to vary from about a week to a few months (or even years). Over this time the shared secret may not be used for any kind of communication and so the only possible threat is insufficient key storage security, which is present in any cryptographic scheme.

In the invention the passage of time strengthens the resulting key, in the sense that the longer the wait before the key is used, the less chance there is that any relevant part of the stream is present in a storage facility anywhere in the world, due to the sheer mass of data. This can be considered to be opposite to the standard assumption of cryptographic strength, i.e. that keys become weaker with time. The use of storage-requirement security (i.e. a procedure that makes it necessary for the interceptor to record an amount of data that exceeds the joint storage capacity of the global technosphere) in an optical-fibre based system makes the proposed method future-proof, since any new methods of cryptanalysis or physical signal interception will be completely powerless to recover the bits that have not been saved in the first place.

Furthermore, past extracted bits are not a hostage to future technology development: the ability to record more data per unit cost in future has no influence over the present time: bits in the random data stream not recorded in the present will not become available later. Nor does leaking the weak secret compromise extracted bits obtained earlier, provided the time difference is sufficient to overwhelm the capacity of attacker's stream storage. In particular, schemes such as EKE [1,2] can be used to leverage the initial weak secret into a strong pseudo-random seed without fear that subsequent development of quantum computers (allowing the easy solution of discrete logarithm and factorization puzzles) will expose previously obtained bits.

A particular advantage of the proposed method is that it tolerates faults and poor performance of optical components below their minimum quality parameters. In the embodiment this is achieved through the use of the forward error correction (FEC) in an off line manner. The present method is unusual in the fibre optic field in that it does not require a transmission system with a low BER, which is one of the key goals of conventional fibre optic communications. By removing this very tough restriction, the proposed method opens up an area of applications for an extremely broad range of well-developed fibre optic technologies using new regimes, which are not restricted by a requirement for low BER. Indeed it is possible to use optical fibre transmission links/lines/systems in regimes with a relatively high BER, where the background BER value is not a limiting factor. This may bring into consideration a large number of technologies with many attractive characteristics (cheap, simple, etc.) that may have been rejected (or that are losing in competition to other technologies) by the optical communication industry because of low BER-performance requirements.

Further benefits of the embodiment arise from the use of fibre optic technology. In the illustrative operating environment there is no theoretical limit on the distance between the beacon and its clients (the user computing systems). Moreover it is completely insensitive to the number of clients on the loop network.

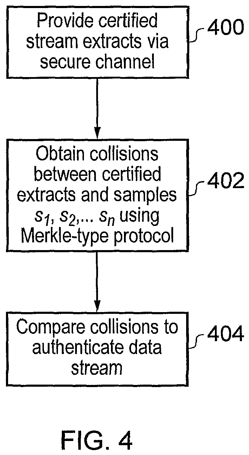

Fig. 4 illustrates an authentication method for use with the invention. Authentication is based on a Merkle-type protocol which determines common bits held by a user and published by the beacon. Thus in addition to the keychain bit extraction explained above, each Alice and Bob are also arranged to sample the data stream e.g. randomly or pseudo-randomly throughout the keychain extraction period to obtain a plurality of authentication bits. The extraction rate of authentication bits is greater than the keychain extraction rate, e.g. of the order of the square root of the extraction rate, e.g. 1 extracted bit for every $10^8$ to $10^9$ transmitted bits in the embodiment discussed above. At least one of the beacon and user must obtain single bit samples. The other may obtain either single bit samples or bit strings comprising a plurality of bits for comparison. The proposed method may avoid the need for per-client state to be kept at the beacon, or for individual communication between each user and the beacon server along a side channel. During keychain extraction, each user may also store sample bit strings extracted from the RHRB stream. This process may take place independently of the keychain bit extraction. The sampling may occur in an unpredictable e.g. random fashion. The sample bit strings may be taken at a rate of order 1 in $10^8$ to $10^9$. The beacon server may take samples at a similar rate and certify them by any suitable method, e.g. public key signature or hash preimage.

The authentication method starts at step 400 with the publication of one or more certified bit strings by the beacon. As discussed above, publication may be via private links to each user or may be open (e.g. an additional lower-bandwidth authenticated broadcast by the beacon server). In step 402 the Merkle-type protocol is used efficiently to obtain the collisions between the sampled bit strings and the certified bit strings. Alice or Bob can now guard against a false beacon by verifying at step 404 (say, based on more than 80% match) sufficiently many of those bits which by chance occur in both their samples and the certified extracts over the course of the collection period. The number of such bits increases linearly with the size of the sample being collected. Ensuring a match of 100 bits over the key collection period would require certification of about 3GB per day (assuming a transmission rate of 10 Tbps, a keychain length of 1000 bits and single bit sampling by the beacon). There would be no technical difficulty for the server to send that amount of data down the optical medium given the terabit rate of the system. The sample should be broadcast along with a sufficiently long cryptographic hash, which also needs to be signed for authentication. However there is no real-time restriction on the broadcast of the signed hash, which may take place offline. The clients need to know that the beacon was authentic only before they commit to using the newly collected shared key, which as indicated above takes a few weeks to a few months. This time scale also makes it feasible and desirable to employ authentication based on physical security (e.g. the delivery of physically authenticated records on tamper-evident media to the clients' sites).

REFERENCES

[1] S. M. Bellovin; M. Merritt (May 1992). "Encrypted Key Exchange: Password-Based Protocols Secure Against Dictionary Attacks". Proceedings of the I.E.E.E. Symposium on Research in Security and Privacy, Oakland.

[2] Bruce Christianson, Michael Roe, David Wheeler: Secure Sessions from Weak Secrets. Security Protocols 11, LNCS 3364: 190-205.

[3] Rabin, Michael and Ding, Yan Zong. "Hyper-Encryption and Everlasting Security" In STACS 2002, Springer LNCS 2285.

[4] U. Maurer. "Conditionally-perfect secrecy and a provably-secure randomized cipher" Journal of Cryptology 5:53-66, 1992.

[5] N. Gisin, G. Ribordy, W. Tittel, and H. Zbinden, "Quantum cryptography," Rev. Mod. Phys. 74, 145-195 (2002).

[6] R. J. Hughes, G. L. Morgan, and C. G. Peterson, "Quantum key distribution over a 48 km optical fibre network," J. Mod. Phys. 47, 533-547 (2000).

[7] C. Gobby, Z. L. Yuan, and A. J. Shields, "Quantum key distribution over 122km standard telecom fiber," Appl. Phys. Lett. 84, 3762-3764 (2004).

[8] A. Yoshizawa, R. Kaji, and H. Tsuchida, "10.5 km fiber-optic quantum key distribution at 1550 nm with a key rate of 45 kHz," Japanese J. Appl. Phys. 43, L735-L737 (2004).

[9] B. B. Wu and E. E. Narimanov, "A method for secure communications over a public fiber-optical network," Opt. Express 14, 3738-3751 (2006).

[10] Z. Yuan and A. Shields, "Continuous operation of a one-way quantum key distribution system over installed telecom fibre," Opt. Express 13, 660-665 (2005)

[11] Bruce Christianson, David Wheeler: Merkle Puzzles Revisited - Finding Matching Elements Between Lists. Security Protocols 9, LNCS 2467: 87-90.

[12] Xuhua Ding, Daniele Mazzocchi, Gene Tsudik: "Experimenting with Server-Aided Signatures" Proceedings of Network and Distributed System Security Symposium, NDSS 2002

[13] R. Anderson, F. Bergadano, B. Crispo, J-H. Lee, C. Manifavas, R. Needham, "A new family of authentication protocols", Operating Systems Review, 32(4):9-20, October 1998

[14] Maurer and Cachin, "Unconditional Secrecy against Memory-Bounded Adversaries", Crypto '97

**Claims**

1. A method of establishing a shared secret between a first user (Alice) and a second user (Bob) arranged to receive a random data stream, the method including:

   a) each user obtaining an extraction schedule using a weak secret k, wherein k is provided to each of the users via a private and endpoint-authenticated channel;
   b) each user extracting one or more keychain bits ($s_1$, $s_2$,...$s_n$ and $s'_1$, $s'_2$,...$s'_n$) from the random data stream in accordance with the extraction schedule to generate a keychain (K, K') having a key portion ($K_A$, $K_B$), an error correction encoding portion ($K_{A(EC)}$, $K_{B(EC)}$), and an error check encoding portion ($K_{A(check)}$, $K_{B(check)}$) the extracting being at an extraction rate chosen to memory bound an enemy;
   c) the first user applying a checksum function (F) to its keychain (K), to generate a result, coding the result by performing an XOR operation to the result using the error correction encoding portion ($K_{A(EC)}$) and communicating the coded result (P) to the second user;
   d) the second user decoding the encoded result received (P') from the first user using its error correction encoding portion ($K_{B(EC)}$) to generate a second result ($F_1$);
   e) the second user obtaining a recovered keychain (K') by using the second result ($F_1$) to correct differences between the key chains (K, K'), and thus the key portions ($K_A$, $K_B$) and the error check encoding portions ($K_{A(check)}$, $K_{B(check)}$), extracted by the first and second users caused by a bit error rate of the random data stream, wherein the first user's key portion ($K_A$) and the second user's recovered key portion ($K'_A$) are usable as the shared secret.

2. A method according to claim 1, wherein the checksum function is a forward error correction function.

3. A method according to any preceding claim including:

   a) the first user applying a check function (h) to its key portion ($K_A$) to generate a first check output ($h(K_A)$) and communicating the first check output ($h(K_A)$) to the second user; and the second user
   c) applying the check function (h) to the recovered key portion ($K'_A$) to generate a second check output ($h(K'_A)$), and
   d) comparing the first and second check outputs ($h(K_A)$, $h(K'_A)$);

   wherein when the first and second check outputs ($h(K_A)$, $h(K'_A)$) match within predetermined tolerances, the recovery process for the key portion ($K'_A$) is verified as successful.

4. A method as claimed in claim 3 including:

   a) the first user coding the first check output ($h(K_A)$) using the key check portion ($K_{A(check)}$) to generate a third result (Q) before this third result is communicated to the second user
   b) the second user decoding the third result received (Q') using the recovered key check portion ($K'_{A(check)}$) to obtain the value of the first check output ($h(K_A)$).

5. A method according to claim 3 or claim 4, wherein the check function (h) is a cryptographic hash function.

6. A method according to any preceding claim wherein the coding and decoding comprises bit-wise exclusive-or.

7. A method according to any preceding claim, wherein the random data stream is transmitted via optical media.

8. A method according to any preceding claim including each user extracting one or more sample bits from the random data stream at a sampling rate greater than the extraction rate for subsequent comparison to certified extracts of the data stream to authenticate the data stream.

9. A method according to claim 8, including publishing each certified extract of the data stream a predetermined time after actual transmission of the bits in that extract.

10. A method according to claim 9, wherein publishing each certified extract includes sending it to each user on tamper evident physical storage media.

**11.** A method according to claim 9, wherein publishing each certified extract includes sending to each user cryptographic or other material enabling the user to verify the origin and integrity of the published extract.

**12.** A method according to any of claims 9 to 11, wherein the certified extracts are sampled from the transmitted data stream at a rate calculated to ensure a predetermined amount of overlap with the sample bits extracted by each user.

**13.** A method according to any preceding claim, wherein: the random data stream transmission rate is 1 terabit per second or more, and/or the extraction rate is 1 bit per $10^{16}$ or more transmitted bits.

**Patentansprüche**

**1.** Verfahren zum Erzeugen eines gemeinsamen Geheimnisses zwischen einem ersten Benutzer (Alice) und einem zweiten Benutzer (Bob), das so angeordnet ist, dass es einen willkürlichen Datenstrom empfängt, wobei das Verfahren folgendes aufweist:

a) jeder Benutzer erhält einen Extraktionsplan unter Verwendung eines schwachen Geheimnisses k, wobei k jedem Benutzer über einen privaten Kanal mit authentifiziertem Endpunkt bereitgestellt wird;
b) jeder Benutzer extrahiert ein oder mehrere Schlüsselbundbits ($s_1$, $s_2$, ... $s_n$ und $s'_1$, $s'_2$, ... $s'_n$) aus dem willkürlichen Datenstrom gemäß dem Extraktionsplan, um einen Schlüsselbund (K, K') mit einem Schlüsselabschnitt ($K_A$, $K_B$), einem Fehlerberichtigungscodierungsabschnitt ($K_{A(EC)}$, $K_{B(EC)}$) und einem Fehlerprüfungscodierungsabschnitt ($K_{A(check)}$, $K_{B(check)}$) zu erzeugen, wobei die Extraktion mit einer Extraktionsrate beginnt, die für eine Speicherbindung eines Feindes ausgewählt ist;
c) der erste Benutzer wendet eine Prüfsummenfunktion (F) auf dessen Schlüsselbund (K) an, um ein Ergebnis zu erzeugen, wobei das Ergebnis durch Ausführen einer XOR-Operation an dem Ergebnis unter Verwendung des Fehlerberichtigungscodierungsabschnitts ($K_{A(EC)}$) codiert wird, und wobei das codierte Ergebnis (P) dem zweiten Benutzer kommuniziert wird;
d) der zweite Benutzer decodiert das von dem ersten Benutzer empfangene codierte Ergebnis (P') unter Verwendung seines Fehlerberichtigungscodierungsabschnitts ($K_{B(EC)}$), so dass ein zweites Ergebnis ($F_1$) erzeugt wird;
e) der zweite Benutzer erhält einen wiederhergestellten Schlüsselbund (K') durch Verwendung des zweiten Ergebnisses ($F_1$) zur Berichtigung von Unterschieden zwischen den Schlüsselbunden (K, K') und somit den Schlüsselabschnitten ($K_A$, $K_B$) und den durch den ersten und zweiten Benutzer extrahierten Fehlerprüfungscodierungsabschnitten ($K_{A(check)}$, $K_{B(check)}$), verursacht durch eine Bitfehlerrate des willkürlichen Datenstroms, wobei der Schlüsselabschnitt ($K_A$) des ersten Benutzers und der wiederhergestellte Schlüsselabschnitt ($K'_A$) des zweiten Benutzers als das gemeinsame Geheimnis verwendet werden können.

**2.** Verfahren nach Anspruch 1, wobei die Prüfsummenfunktion eine Vorwärts-Fehlerberichtigungsfunktion ist.

**3.** Verfahren nach einem der vorstehenden Ansprüche, das folgendes aufweist:

a) der erste Benutzer wendet eine Prüffunktion (h) auf dessen Schlüsselabschnitt ($K_A$) an, um eine erste Prüfausgabe ($h(K_A)$) zu erzeugen, und kommuniziert die erste Prüfausgabe ($h(K_A)$) an den zweiten Benutzer; und der zweite Benutzer
c) wendet die Prüffunktion (h) auf den wiederhergestellten Schlüsselabschnitt ($K'_A$) an, um eine zweite Prüfausgabe ($h(K'_A)$) zu erzeugen; und
d) vergleicht die ersten und die zweiten Prüfausgaben ($k(K_A)$, $h(K'_A)$);

wobei, wenn die ersten und zweiten Prüfausgaben ($k(K_A)$, $h(K'_A)$) innerhalb vorbestimmter Toleranzen übereinstimmen, der Wiederherstellungsprozess für den Schlüsselabschnitt ($K'_A$) als erfolgreich verifiziert wird.

**4.** Verfahren nach Anspruch 3, das folgendes aufweist:

a) der erste Benutzer codiert die erste Prüfausgabe ($h(K_A)$) unter Verwendung des Schlüsselprüfabschnitts ($K_{A(check)}$), um ein drittes Ergebnis (Q) zu erzeugen, bevor das dritte Ergebnis an den zweiten Benutzer kommuniziert wird;
b) der zweite Benutzer decodiert das empfangene dritte Ergebnis (Q') unter Verwendung des wiederhergestellten Schlüsselprüfabschnitts ($K'_{A(check)}$), um den Wert der ersten Prüfausgabe ($h(K_A)$) zu erhalten.

**5.** Verfahren nach Anspruch 3 oder 4, wobei die Prüffunktion (h) eine kryptografische Hashfunktion ist.

**6.** Verfahren nach einem der vorstehenden Ansprüche, wobei das Codieren und Decodieren ein bitweises exklusives Oder umfassen.

**7.** Verfahren nach einem der vorstehenden Ansprüche, wobei der willkürliche Datenstrom über optische Medien übermittelt wird.

8. Verfahren nach einem der vorstehenden Ansprüche, das es aufweist, dass jeder Benutzer ein oder mehrere Abtastbits aus dem willkürlichen Datenstrom mit einer Abtastrate extrahiert, die höher ist als die Extraktionsrate für einen folgenden Verglich mit zertifizierten Extrakten des Datenstroms zur Authentifizierung des Datenstroms.

9. Verfahren nach Anspruch 8, welches das Publizieren jedes zertifizierten Extrakts des Datenstroms zu einer vorbestimmten Zeit nach der tatsächlichen Übermittlung der Bits in dem Extrakt aufweist.

10. Verfahren nach Anspruch 9, wobei das Publizieren jedes zertifizierten Extrakts das Senden des Extrakts an jeden Benutzer auf einem manipulationssicheren physischen Speichermedium aufweist.

11. Verfahren nach Anspruch 9, wobei das Publizieren jedes zertifizierten Extrakts das Senden von kryptografischem oder anderem Material an jeden Benutzer aufweist, was es dem Benutzer ermöglicht, die Herkunft und die Integrität des publizierten Extrakts zu verifizieren.

12. Verfahren nach einem der Ansprüche 9 bis 11, wobei die zertifizierten Extrakte aus dem übermittelten Datenstrom mit einer Rate abgetastet werden, die so berechnet ist, dass sie ein vorbestimmtes Ausmaß der Überlappung mit den von jedem Benutzer extrahierten Abtastbits sicherstellt.

13. Verfahren nach einem der vorstehenden Ansprüche, wobei: die Übermittlungsrate des willkürlichen Datenstroms 1 Terabit pro Sekunde oder mehr beträgt, und/oder wobei die Extraktionsrate 1 Bit pro $10^{16}$ oder mehr übermittelten Bits beträgt.

**Revendications**

1. Procédé d'établissement d'un secret partagé entre un premier utilisateur (Alice) et un second utilisateur (Bob) conçu pour recevoir un flux de données aléatoires, le procédé comprenant les étapes dans lesquelles :

   a) chaque utilisateur obtient un calendrier d'extraction à l'aide d'un k secret faible, k étant fourni à chacun des utilisateurs par l'intermédiaire d'un canal privé et authentifié par le point final ;
   b) chaque utilisateur extrait un ou plusieurs bits de chaîne de clés ($s_1$, $s_2$, ...$s_n$ et $s'_1$, $s'_2$, ...$s'_n$) du flux de données aléatoires conformément au calendrier d'extraction pour générer une chaîne de clés (K, K') ayant une partie de clé ($K_A$, $K_B$), une partie d'encodage de correction d'erreur ($K_{A(EC)}$, $K_{B(EC)}$), et une partie d'encodage de contrôle d'erreur ($K_{A(check)}$, $K_{B(check)}$), l'extraction étant à une vitesse d'extraction choisie pour lier par la mémoire un ennemi ;
   c) le premier utilisateur applique une fonction de somme de contrôle (F) à sa chaîne de clés (K), pour générer un résultat, code le résultat en effectuant une opération XOU sur le résultat à l'aide de la partie de codage de correction d'erreur ($K_{A(EC)}$) et communique le résultat codé (P) au second utilisateur ;
   d) le second utilisateur décode le résultat codé reçu (P') du premier utilisateur à l'aide de sa partie d'encodage de correction d'erreur ($K_{B(EC)}$) pour générer un deuxième résultat ($F_1$) ;
   e) le second utilisateur obtient une chaîne de clés récupérée (K') à l'aide du deuxième résultat ($F_1$) pour corriger les différences entre les chaînes de clés (K, K'), et donc les parties de clé ($K_A$, $K_B$) et les parties d'encodage de contrôle d'erreur ($K_{A(check)}$, $K_{B(check)}$), extraites par les premier et second utilisateurs causées par un taux d'erreur binaire du flux de données aléatoires, la partie de clé de premier utilisateur ($K_A$) et la partie de clé récupérée du second utilisateur ($K'_A$) étant utilisables en tant que secret partagé.

2. Procédé selon la revendication 1, la fonction de somme de contrôle étant une fonction de correction d'erreurs sans voie de retour.

3. Procédé selon l'une quelconque des revendications précédentes, comprenant les étapes dans lesquelles :

   a) le premier utilisateur applique une fonction de contrôle (h) à sa partie de clé ($K_A$) pour générer une première sortie de contrôle (h ($K_A$)) et communique la première sortie de contrôle (h ($K_A$)) au second utilisateur ;
   et le second utilisateur
   c) applique la fonction de contrôle (h) à la partie de clé récupérée ($K'_A$) pour générer une seconde sortie de contrôle (h ($K'_A$)), et
   d) compare les résultats des première et seconde sorties de contrôle (h($K_A$), h($K'_A$));

lorsque les première et seconde sorties de contrôle (h ($K_A$), h ($K'_A$)) correspondent à des tolérances prédéfinies, le processus de récupération de la partie de clé ($K'_A$) est vérifié comme étant réussi.

4. Procédé selon la revendication 3 comprenant les revendications dans lesquelles :

a) le premier utilisateur code la première sortie de contrôle ($h(K_A)$) à l'aide de la partie de contrôle de clé ($K_{A(check)}$) pour générer un troisième résultat (Q) avant que ce troisième résultat ne soit communiqué au second utilisateur.

b) le second utilisateur décode le troisième résultat reçu (Q') à l'aide de la partie de contrôle de clé récupérée ($K'_{A(check)}$) pour obtenir la valeur du premier résultat de contrôle '$h(K_A)$.

5. Procédé selon la revendication 3 ou 4, la fonction de contrôle (h) étant une fonction de hachage cryptographique.

6. Procédé selon l'une quelconque des revendications précédentes, le codage et le décodage comprenant un ou-exclusif bit par bit.

7. Procédé selon l'une quelconque des revendications précédentes, le flux de données aléatoires étant transmis par l'intermédiaire de supports optiques.

8. Procédé selon l'une quelconque des revendications précédentes, comprenant l'étape dans laquelle par chaque utilisateur extrait un ou plusieurs bits d'échantillon du flux de données aléatoires à une vitesse d'échantillonnage supérieure à la vitesse d'extraction pour une comparaison ultérieure avec des extraits certifiés du flux de données pour authentifier le flux de données.

9. Procédé selon la revendication 8, comprenant l'étape consistant à publier chaque extrait certifié du flux de données à une heure prédéfinie après la transmission réelle des bits dans cet extrait.

10. Procédé selon la revendication 9, la publication de chaque extrait certifié comprenant l'étape consistant à l'envoyer à chaque utilisateur sur un support de stockage physique inviolable.

11. Procédé selon la revendication 9, la publication de chaque extrait certifié comprenant l'étape consistant à envoyer à chaque utilisateur un matériau cryptographique ou autre permettant à l'utilisateur de vérifier l'origine et l'intégrité de l'extrait publié.

12. Procédé selon l'une quelconque des revendications 9 à 11, les extraits certifiés étant échantillonnés à partir du flux de données transmis à une vitesse calculée pour assurer une quantité prédéfinie de chevauchement avec les bits d'échantillon extraits par chaque utilisateur.

13. Procédé selon l'une quelconque des revendications précédentes, la vitesse de transmission de flux de données aléatoires étant de 1 térabit par seconde ou plus, et/ou la vitesse d'extraction étant de 1 bit

par $10^{16}$ bits transmis ou plus.

FIG. 1

FIG. 2

Provide private key *k*
to Alice and Bob via
secure channel ⌐300

Alice                                                                                              Bob

302a ⌐ Obtain extraction schedule
from extraction algorithm *z*
using *k*

Obtain extraction schedule
from extraction algorithm *z*
using *k* ⌐302b

304a ⌐ Extract sample $s_1$, $s_2$,... $s_n$
from random bit
stream

Extract samples $s'_1$, $s'_2$,...
$s'_n$ from random bit
stream ⌐304b

306a ⌐ Generate keychain *K* from
samples $s_1$, $s_2$,... $s_n$

Generate keychain *K'* from
samples $s'_1$, $s'_2$,... $s'_n$ ⌐306b

308 ⌐ Obtain key $K_A$ from *K* and
calculate error correction
function $F(K_A)$

310 ⌐ Calculate *P* from $F(K_A)$
and send to Bob

*P*

Recover key $K'_A$ from *K'*
using *P* ⌐312

314 ⌐ Calculate error check
function $h(K_A)$

Calculate error check
function $h(K'_A)$ ⌐318

316 ⌐ Calculate *Q* from $h(K_A)$
and send to Bob

*Q*

Obtain error check $h(K_A)$
from *Q* ⌐320

Compare $h(K'_A)$ with $h(K_A)$
to check similarity
of $K'_A$ to $K_A$ ⌐322

FIG. 3

Provide certified
stream extracts via
secure channel ⌐400

Obtain collisions
between certified
extracts and samples ⌐402
$s_1, s_2,... s_n$ using
Merkle-type protocol

Compare collisions to ⌐404
authenticate data
stream

FIG. 4

## REFERENCES CITED IN THE DESCRIPTION

### Patent documents cited in the description

- US 7006633 B
- US 7006633 A

### Non-patent literature cited in the description

- **DODIS, Y. et al.** Correcting errors without leaking partial information. *Proc. of 37th ACM Symp. on Theory of Computing,* 24 May 2005
- **S. M. BELLOVIN ; M. MERRITT.** Encrypted Key Exchange: Password-Based Protocols Secure Against Dictionary Attacks. *Proceedings of the I.E.E.E. Symposium on Research in Security and Privacy,* May 1992
- **BRUCE CHRISTIANSON ; MICHAEL ROE ; DAVID WHEELER.** Secure Sessions from Weak Secrets. Security Protocols. *LNCS,* vol. 3364 (11), 190-205
- Hyper-Encryption and Everlasting Security. **RABIN, MICHAEL ; DING, YAN ZONG.** STACS. Springer LNCS, 2002, 2285
- **U. MAURER.** Conditionally-perfect secrecy and a provably-secure randomized cipher. *Journal of Cryptology,* 1992, vol. 5, 53-66
- **N. GISIN ; G. RIBORDY ; W. TITTEL ; H. ZBINDEN.** Quantum cryptography. *Rev. Mod. Phys.,* 2002, vol. 74, 145-195
- **R. J. HUGHES ; G. L. MORGAN ; C. G. PETERSON.** Quantum key distribution over a 48 km optical fibre network. *J. Mod. Phys.,* 2000, vol. 47, 533-547
- **C. GOBBY ; Z. L. YUAN ; A. J. SHIELDS.** Quantum key distribution over 122km standard telecom fiber. *Appl. Phys. Lett.,* 2004, vol. 84, 3762-3764
- **A. YOSHIZAWA ; R. KAJI ; H. TSUCHIDA.** 10.5 km fiber-optic quantum key distribution at 1550 nm with a key rate of 45 kHz. *Japanese J. Appl. Phys.,* 2004, vol. 43, L735-L737
- **B. B. WU ; E. E. NARIMANOV.** A method for secure communications over a public fiber-optical network. *Opt. Express,* 2006, vol. 14, 3738-3751
- **Z. YUAN ; A. SHIELDS.** Continuous operation of a one-way quantum key distribution system over installed telecom fibre. *Opt. Express,* 2005, vol. 13, 660-665
- **BRUCE CHRISTIANSON ; DAVID WHEELER.** Merkle Puzzles Revisited - Finding Matching Elements Between Lists. Security Protocols. *LNCS,* vol. 2467 (9), 87-90
- **XUHUA DING ; DANIELE MAZZOCCHI ; GENE TSUDIK.** Experimenting with Server-Aided Signatures. *Proceedings of Network and Distributed System Security Symposium, NDSS,* 2002
- **R. ANDERSON ; F. BERGADANO ; B. CRISPO ; J-H. LEE ; C. MANIFAVAS ; R. NEEDHAM.** A new family of authentication protocols. *Operating Systems Review,* October 1998, vol. 32 (4), 9-20
- **MAURER ; CACHIN.** Unconditional Secrecy against Memory-Bounded Adversaries. *Crypto,* vol. 97